# EUROPÄISCHE PATENTSCHRIFT

(11) **EP 4 632 625 B1**
(45) Veröffentlichungstag und Bekanntmachung des Hinweises auf die Patenterteilung: **08.04.2026**
(21) Anmeldenummer: 24169538.6
(22) Anmeldetag: 10.04.2024
(51) Int. Cl.: G06K 7/10

(54) **LESEN VON OPTISCHEN CODES**
READING OPTICAL CODES
LECTURE DE CODES OPTIQUES

(43) Veröffentlichungstag der Anmeldung: 15.10.2025
(73) Patentinhaber: SICK AG, 79183 Waldkirch (DE)
(72) Erfinder: Falk, Thorsten, 79292 Pfaffenweiler (DE); Schüler, Pascal, 79331 Teningen (DE); Zopf, Steffen, 79183 Waldkirch (DE); Steinbuch, Jonathan, 79211 Denzlingen (DE); Burghardt, Sascha, 79183 Waldkirch (DE); Zimmer, Julian, 79114 Freiburg (DE); Hallmann, Vicky, 79104 Freiburg (DE); Hampf, Marcel, 77955 Ettenheim (DE); Roser, Christofer, 78098 Triberg (DE)

(56) Entgegenhaltungen:
- DE-A1- 102011 056 660
- DE-A1- 102016 114 745

## Beschreibung

Die Erfindung betrifft eine Codelesevorrichtung und ein Verfahren zum Lesen von optischen Codes nach dem Oberbegriff von Anspruch 1 beziehungsweise 15.

Codeleser sind von Supermarktkassen, zur automatischen Paketidentifikation, Sortierung von Postsendungen, von der Gepäckabfertigung in Flughäfen und aus anderen Logistikanwendungen bekannt. In einer wichtigen Anwendungsgruppe werden die codetragenden Objekte an dem Codeleser vorbei gefördert. Ein Codeleser auf Basis von Matrixkameras nimmt dabei eine Bildsequenz auf. Dabei werden einerseits mehrere Bilder hintereinander im Laufe der Förderbewegung aufgenommen. Zudem ist häufig das Lesefeld des Codelesers zu klein, um die gesamte Breite eines Förderbandes abzudecken, wofür dann mehrere Kameraköpfe nebeneinander angeordnet werden. Schließlich ist auch denkbar, dass die Perspektive des Codelesers nicht erlaubt, alle Objektseiten zu erfassen, und auch aus diesem Grund können mehrere Codeleser beispielsweise als Lesetunnel vorgesehen sein, um Objekte von mehreren oder allen Seiten aufzunehmen.

Als Vorbereitung für das Lesen von Codes wird in einem aufgenommenen Ausgangsbild eines codetragenden Objekts nach Codebildbereichen gesucht, also denjenigen Bereichen im Bild, die potentiell einen Code enthalten können. Dieser Schritt wird als Segmentierung oder Vorsegmentierung bezeichnet. Die Codebildbereiche werden in unterschiedliche Codearten klassifiziert und der enthaltene Code wird je nach Codeart mit einem passenden Decoderverfahren gelesen. Möglicherweise stellt das Decoderverfahren auch fest, dass die Segmentierung einen falsch-positiven Codebildbereich erkannt hat, der tatsächlich keinen Code enthält und deshalb im Nachgang verworfen wird.

Bei der oben beschriebenen Förderanwendung ergibt sich ein Lesetor als diejenige Zeit, in der ein jeweiliges Objekt innerhalb der Förderbewegung von dem Codeleser erfasst werden kann. Das Lesetor ermöglicht somit die Aufnahmen einer Bildsequenz mehrerer Bilder aus unterschiedlichen Perspektiven. Daraus ergeben sich einerseits mehrere Chancen, einen jeweiligen Code zu lesen, denn es genügt, wenn das dem Decoderverfahren in einem der Bilder der Bildsequenz gelingt. Andererseits stellt das Lesetor eine Echtzeitbedingung, nämlich dass es gelingen muss, alle Bilder der Bildsequenz innerhalb des Lesetors oder jedenfalls bis zum Beginn des nächsten Lesetors eines nachfolgenden Objekts zu verarbeiten. Hier reicht trotz der mehreren Chancen eine Teilauswertung von nur einigen Bildern nicht, da beispielsweise ein bestimmter Code erst auf dem letzten Bild erkennbar sein könnte. Die Echtzeitbedingung kann etwas gelockert werden, da die Verarbeitung eines einzelnen Bildes etwas länger dauern darf als eine Periode der Bildwiederholrate, solange in Summe das Lesetor eingehalten bleibt. Denkbar ist weiterhin, eine Objektlücke bis zum nächsten Lesetor dem früheren Lesetor noch zuzuschlagen.

Angestrebt ist eine hohe Leserate, im Idealfall das Lesen aller Codes auf jedem Objekt innerhalb von dessen Lesetor. Ungelesene Codes oder Lesefehler zwingen zu aufwändigen Fehlerbehebungen, wie dem erneuten manuellen Abscannen oder einer Nachsortierung. Problematisch ist hierbei, wenn wertvolle Decoderzeit für letztlich erfolglose Leseversuche aufgewandt wird und deshalb wegen der Echtzeitbedingung Codebildbereiche unbearbeitet bleiben, deren Code eigentlich hätte gelesen werden können. Im Folgenden werden einige Beispielszenarien genannt.

Streudruckregionen in einem oder mehreren Bildern der Bildsequenz erhöhen die Verarbeitungszeit stark, bis hin zu dem Extremfall, dass die Verarbeitungszeit das gesamte Lesetor übersteigt und damit alle Bilder für ein eigentliches Codelesen verlorengehen. Besonders gegen Anfang und Ende eines Lesetors sind häufig nur Codeteile sichtbar. Das Decoderverfahren versucht solche Codeteile möglicherweise mit aggressiveren Algorithmen und Fehlerkorrektur und damit erhöhtem Zeitaufwand zu lesen, und diese Zeit fehlt dann für die Bilder, in denen der Code vollständig aufgenommen ist und mit wenig Aufwand gelesen werden könnte. Häufig sind Codes in einigen Bildern aufgrund optischer Effekte schlecht lesbar, wie Reflexionen, Unschärfe, niedrigem Kontrast oder perspektivischer Verzerrung. Wiederum kann es passieren, dass das Decoderverfahren auf einem Codebildbereich eines ungünstigen Bildes viel Zeit verliert und deshalb innerhalb des Lesetors gar nicht mehr versucht werden kann, eine objektiv günstigere Aufnahme heranzuziehen.

Im Stand der Technik werden die Bilder einfach in der zeitlichen Reihenfolge ihrer Aufnahme verarbeitet. Das ist insofern sinnvoll, als mit der Verarbeitung begonnen werden kann, sobald das erste Bild verfügbar ist. Solange in Summe die Segmentierung aller Bilder und das Bearbeiten der dabei je Bild gefundenen Codebildbereiche mit einem Decoderverfahren nicht länger dauert als das Lesetor, ist das Problem der Objektidentifizierung damit prinzipiell gelöst. Tritt aber einer der genannten störenden Effekte in einem frühen oder gar schon in dem ersten Bild der Sequenz auf, werden vielversprechen-dere Codebildbereiche in späteren Bildem gar nicht gefunden und verarbeitet, und die Wahrscheinlichkeit einer erfolgreichen Identifikation des Objektes ist gering.

Die DE 10 2011 056 660 A1 offenbart einen Markierungsleser, der zum Priorisieren von Bildern eingerichtet ist. Dabei werden Bilder anhand von Merkmalattributen bewertet und anschließend zum Decodieren priorisiert. Da die Priorisierung auf der Ebene von Bildern bleibt, ist dies nur ein erster Schritt, um die geschilderte Problematik zu lösen. Das Vorgehen wird insbesondere versagen, wenn sich in einem Bild zugleich ein gut lesbarer und ein schlecht lesbarer Code befinden. Eine richtige Priorisierung für diese Bild gibt es nicht: entweder beißt sich der Decoder bei hoher Bewertung an dem schlecht lesbaren Code fest, oder es wird bei geringer Bewertung der gut lesbare Code übergangen.

Aus der DE 10 2016 114 745 A1 sind Systeme und Verfahren zur Sortierung von Bildaufnahrneeinstellungen zum Muster-Stitching und Decodieren mittels mehrerer aufgenommener Bilder bekannt.

Es ist daher Aufgabe der Erfindung, die Verarbeitung von Bildsequenzen zum Lesen optischer Codes weiter zu verbessern.

Diese Aufgabe wird durch eine Codelesevorrichtung und ein Verfahren zum Lesen von optischen Codes nach Anspruch 1 beziehungsweise 15 gelöst. Die Codelesevorrichtung umfasst einen vorzugsweise matrixförmigen Bildsensor zur Aufnahme von Objekten sowie eine interne und/oder externe Steuer- und Auswertungseinheit, die die Bildaufnahme und Bildauswertung steuert, beziehungsweise vornimmt. Es wird eine Bildsequenz mit einer Vielzahl von Bildern mindestens eines optische Codes tragenden Objekts aufgenommen, d.h. mindestens zwei und vorzugsweise n=3, 4, 5, ..., 10, ..., 20 oder mehr Bilder. Vorab ist nicht bekannt, ob ein aufgenommenes Objekt keinen, einen oder mehrere Codes aufweist, und außerdem kann aus der Perspektive einer jeweiligen Aufnahme nur ein Teil des Objekts beziehungsweise von dessen Code oder Codes zu sehen sein.

In den Bildern werden Codebildbereiche gesucht, also Bildbereiche (ROI, region of interest), in denen sich ein Kandidat für einen optischen Code befindet. Dieser in der Einleitung schon erwähnte Vorgang wird auch als Segmentierung bezeichnet und ist an sich bekannt. Zum Zeitpunkt der Segmentierung werden nur Indikatoren für optische Codes ausgewertet, deshalb enthält ein Codebildbereich zunächst lediglich einen Kandidaten für einen optischen Code. Die Codebildbereiche werden mit einem Decoderverfahren oder einer Decoderengine bearbeitet, um den Code zu lesen. Wie die Segmentierung ist die eigentliche Decodierung an sich bekannt, dabei wird versucht, mit einem oder mehreren Verfahren einen bestimmten Codetyp zu lesen, oder es werden verschiedene Codetypen durchprobiert. Im Erfolgsfall ist das Decodier- oder Leseergebnis die in dem Code des jeweiligen Codebildbereichs enthaltene Information.

Die Erfindung geht von dem Grundgedanken aus, die Verarbeitungsreihenfolge der Codebildbereiche über die Bilder der Bildsequenz hinweg zu wählen. Es werden also nicht wie im Stand der Technik vollständige Bilder nacheinander abgearbeitet, weder in chronologischer Reihenfolge der Bilder wie in den meisten herkömmlichen Anwendungen noch in priorisierter Reihenfolge der Bilder wie in der DE 10 2011 056 660 A1. Vielmehr werden neu hinzukommende Bilder der Bildsequenz segmentiert, auch wenn noch nicht alle Codebildbereiche der bisherigen Bilder abgearbeitet sind. Die Codebildbereiche werden gleichsam über Bilder der Bildsequenz hinweg in einem gemeinsamen Pool gesammelt, und wenn es freie Bearbeitungskapazitäten gibt, wird der jeweilige nächste zu bearbeitende Codebildbereich aus dem Pool entnommen. Wenn zugleich die Segmentierung eines neuen Bildes ansteht und noch Codebildbereiche zu bearbeiten sind, ist eine unten näher diskutierte Abwägung zu treffen, womit die Steuer- und Auswertungseinheit sich zuerst befasst, oder es kann beides parallel verarbeitet werden.

Die Erfindung hat den Vorteil, dass eine deutlich verbesserte Priorisierung über die Bildsequenz hinweg vorgenommen wird und somit die begrenzte Bearbeitungszeit beispielsweise eines Lesetors in verbesserter Weise für aussichtsreiche Codebildbereiche aufgewandt werden kann. Dadurch gelingt es, mehr Codebildbereiche vollständig auszuwerten, somit die Wahrscheinlichkeit für ein Lesen von Codes und letztlich die Leserate zu steigern. Die vorhandene Rechenkapazität wird besser genutzt. Eine Zuordnung der gelesenen Codes zu einem bestimmten Objekt bleibt möglich, da sie nicht von der Reihenfolge der Bearbeitung abhängt

Die Steuer- und Auswertungseinheit weist bevorzugt mindestens zwei Verarbeitungseinheiten für eine parallele Verarbeitung von Bildern und/oder Codebildbereichen auf. Verarbeitungseinheiten sind ein Begriff für Komponenten, die eine parallele Verarbeitung leisten können. Das können mehrere Hardwarebausteine, Strukturen innerhalb eines Hardwarebausteins, wie Prozessorkerne, oder softwareseitige Unterteilungen oder Threads sein. Eine Steuer- und Auswertungseinheit gemäß dieser Ausführungsform mit mehreren Verarbeitungseinheiten ist also zu einer Parallelverarbeitung befähigt. Damit können mehrere Bilder parallel segmentiert, mehrere Codebildbereiche parallel mit einem Decoderverfahren bearbeitet oder beides gemischt parallel verarbeitet werden. Es sei nochmals betont, dass parallel bearbeitete Codebildbereiche in der Regel aus mehreren Bildern stammen. Ausnahmen sind das Zeitintervall, in dem zunächst nur das erste Bild aufgenommen ist, oder ein späteres Zeitintervall, in dem aufgrund einer besonderen Konstellation alle Codebildbereiche aus früheren Bildern schon verarbeitet sind. Die Erfindung ist aber auf den allgemeinen Fall ausgelegt, kann also mit den Ausnahmen auch umgehen, ist aber anders als der Stand der Technik nicht darauf beschränkt.

Die Steuer- und Auswertungseinheit ist bevorzugt dafür ausgebildet, Codebildbereiche mit einer Wertzahl daraufhin zu bewerten, wie wahrscheinlich es ist, dass sich darin ein optischer Code befindet. Die Wertzahl (Scoring) ermöglicht eine Prognose, ob der Kandidat eines Codebildbereichs wirklich ein lesbarer optischer Code ist. Dafür wird noch nicht das Decoderverfahren eingesetzt, sondern es wird mindestens ein allgemeiner Parameter der Bildqualität insgesamt oder im betroffenen Codebildbereich, ein geometrischer Parameter oder dergleichen bestimmt und bewertet.

Bevorzugt wird die Wertzahl aus einem Kontrast, einer Kantenanzahl, einer Kantendichte, einer Hauptorientierung einer Textur und/oder Eigenschaften eines Codeuntergrundes bestimmt. Das sind Bildmerkmale, die sich schnell und robust berechnen lassen und die eine gute Vorhersagekraft haben, ob ein Codebildbereich einen voraussichtlich lesbaren Code enthält. Der Kontrast wird beispielsweise über eine Grauwertverteilung beziehungsweise eine Varianz der Grauwerte gemessen. Für die Kantenerkennung gibt es eine Vielzahl von Bildauswertungsverfahren, wobei die Kanten dann durch Maße wie ihre Anzahl, Dichte oder Orientierung weiter bewertet werden. Oft sind Codes als Etiketten aufgeklebt und können anhand ihres Untergrunds erkannt werden. Solche allgemeinen Eigenschaften werden vorzugsweise ohnehin im Rahmen der Segmentierung bestimmt, um die Codebildbereiche überhaupt erst als solche zu identifizieren. Daher können viele vorhandene Segmentierungsverfahren auch für die Bestimmung der Wertzahl genutzt werden.

Die Steuer- und Auswertungseinheit ist bevorzugt dafür ausgebildet, Bilder der aufgenommenen Vielzahl von Bildern in einer ersten Queue oder ersten Verarbeitungsschlange zu speichern. Die erste Queue ist also eine Bilderqueue. Vorzugsweise handelt es sich um eine FiFo (First in, first out), in die jedes neu aufgenommene Bild hineingeschoben wird. Die Steuer- und Auswertungseinheit beziehungsweise eine ihrer Verarbeitungseinheiten kann jeweils bei vorhandener Bearbeitungskapazität ein Bild aus der ersten Queue entnehmen. Die Reihenfolge der Bearbeitung entspricht dann der Chronologie der Aufnahmen, wobei die erste Queue es ermöglicht, dass ein Bild länger bearbeitet wird als die Periode zwischen zwei Aufnahmen. Vorhandene Bearbeitungskapazität bedeutet hier und im Folgenden insbesondere, dass momentan einer Verarbeitungseinheit keine Aufgabe (task) zugewiesen und sie damit frei für die weitere Aufgabe ist.

Die Steuer- und Auswertungseinheit ist bevorzugt dafür ausgebildet, Codebildbereiche in einer zweiten Queue oder Verarbeitungsschlange zu speichern. Die zweite Queue ist damit eine Codebildbereichqueue über Bilder hinweg und ein Implementierungsbeispiel des oben erwähnten Pools für Codebildbereiche. Die Steuer- und Auswertungseinheit beziehungsweise eine ihrer Verarbeitungseinheiten kann jeweils bei vorhandener Bearbeitungskapazität einen Codebildbereich aus der zweiten Queue entnehmen. Die Reihenfolge in der zweiten Queue ist vorzugsweise eine nach Wertzahl priorisierte Reihenfolge. Somit bearbeitet die Steuer- und Auswertungseinheit beziehungsweise eine ihrer Verarbeitungseinheiten die Codebildbereiche nach Relevanz oder voraussichtlichem Leseerfolg. Damit wird die verfügbare Verarbeitungszeit optimal ausgenutzt. Vorsorglich sei darauf hingewiesen, dass die höchste Wertzahl die größte Relevanz hinsichtlich voraussichtlich lesbarer Codes bedeutet, auch wenn dies intern durch andere Zahlen repräsentiert sein mag. Die Ordnung in der zweiten Queue wird bevorzugt dadurch erreicht, dass ein jeweils hinzukommender Codebildbereich entsprechend seiner Wertzahl einsortiert wird (insertion sort). Im Endeffekt kommt es aber nicht auf die konkrete Implementierung der zweiten Queue oder von deren Sortierung an, sondern darauf, dass die gemäß Wertzahl relevantesten Codebildbereiche höchste Priorität genießen, was beispielsweise auch durch ein gezieltes Springen innerhalb der zweiten Queue möglich wäre.

Die Steuer- und Auswertungseinheit ist bevorzugt dafür ausgebildet, ein Bild aus der ersten Queue zu entnehmen, darin Codebildbereiche aufzufinden und die gefundenen Codebildbereiche in der zweiten Queue zu speichern. Die Steuer- und Auswertungseinheit beziehungsweise eine ihrer Verarbeitungseinheiten füllt somit die zweite Queue der Codebildbereiche durch Segmentierung eines Bildes aus der ersten Queue auf. Dies geschieht vorzugsweise parallel dazu, dass andere Verarbeitungseinheiten bereits Codebildbereiche aus der zweiten Queue mit einem Decoderverfahren bearbeiten. Ist mindestens eine weitere Verarbeitungseinheit verfügbar, so besteht die Möglichkeit, mit mehreren Verarbeitungseinheiten parallel dasselbe Bild zu segmentieren oder, sofern in der ersten Queue sogar noch mindestens ein zusätzliches Bild gespeichert ist, parallel mehrere Bilder zu segmentieren.

Die Steuer- und Auswertungseinheit ist bevorzugt dafür ausgebildet, einen Codebildbereich aus der zweiten Queue zu entnehmen und mit mindestens einem Decoderverfahren zu bearbeiten. Bei vorhandener Bearbeitungskapazität bearbeitet also die Steuer-und Auswertungseinheit beziehungsweise eine ihrer Verarbeitungseinheiten den nächsten Codebildbereich. Da die zweite Queue vorzugsweise entsprechend aufgebaut ist, handelt es sich bei dem jeweils entnommenen Codebildbereich um denjenigen, der gemäß Wertzahl am wahrscheinlichsten einen lesbaren Code enthält. Da weiterhin die zweite Queue aus mehreren bisher aufgenommenen Bildern mit Codebildbereichen gespeist ist, ist es der am wahrscheinlichsten lesbare - und noch nicht gelesene - Code nicht nur des aktuellen Bildes, sondern aller bisher aufgenommenen Bilder.

Die Steuer- und Auswertungseinheit ist bevorzugt dafür ausgebildet, auf die erste Queue und die zweite Queue nach einem Vorzugsschema zuzugreifen, insbesondere nur dann einen Codebildbereich aus der zweiten Queue zu entnehmen, wenn die erste Queue leer ist. Nach einer gewissen Einschwingphase werden regelmäßig beide Queues gefüllt sein. Es muss daher bei vorhandener Bearbeitungskapazität der Steuer- und Auswertungseinheit beziehungsweise einer ihrer Verarbeitungseinheiten entschieden werden, welche Aufgabe als nächstes angegangen wird. Dazu kann eine Gewichtung angenommen werden, wie 50/50 oder 80/20, sei es im Sinne einer Wahrscheinlichkeit oder eines festen Schemas. Vorteilhafterweise erhält die erste Queue ein höheres Gewicht, bis hin zu einer steten Bevorzugung oder einer Gewichtung von 100/0, was bedeutet, dass auf die zweite Queue nur zugegriffen wird, wenn die erste Queue leer ist. Die Heuristik dahinter ist, dass jedes neue Bild die Chance bietet, Codebildbereiche mit besseren Wertzahlen zu finden. Beispielsweise wird derselbe Code in einer späteren Aufnahme nochmals unter besseren Lichtverhältnissen oder aus günstigerer Perspektive erfasst. Dann ist es sinnvoller, die Bearbeitungszeit dem Codebildbereich mit dem leichter lesbaren Code zu widmen, zumal eine Segmentierung sämtlicher Bilder ohnehin anzustreben ist, denn manche Codes finden sich überhaupt nur oder jedenfalls in ausreichender Qualität nur in einem einzigen Bild der Bildsequenz.

Die Steuer- und Auswertungseinheit ist bevorzugt dafür ausgebildet, die Bearbeitung eines Codebildbereichs mit mindestens einem Decoderverfahren spätestens nach einer ersten Maximalzeit abzubrechen. Damit wird der Fall aufgefangen, dass die Steuer- und Auswertungseinheit einen großen Anteil der verfügbaren Verarbeitungszeit auf einen einzigen Codebildbereich verwendet und deswegen andere Codebildbereiche, womöglich sämtliche anderen Codebildbereiche gar nicht mehr bearbeitet werden. Im Falle mehrerer Verarbeitungseinheiten ist das etwas weniger kritisch, aber auch dann droht ein ganzer Zweig der parallelen Verarbeitung auszufallen. Die Steuer- und Auswertungseinheit beziehungsweise deren betroffene Verarbeitungseinheit wird durch den Abbruch wieder für andere Aufgaben frei. Die erste Maximalzeit kann dynamisch an die Wertzahl und/oder den Füllstand der Queues beziehungsweise die insgesamt noch verfügbare Bearbeitungszeit angepasst werden, insbesondere kann einem Codebildbereich mit hoher Wertzahl, bei (weitgehend) leeren Queues und/oder noch viel verfügbarer Verarbeitungszeit eine längere erste Maximalzeit zugewiesen werden. Nach einem Abbruch kann der betroffene Codebildbereich verworfen oder in die zweite Queue zurückgelegt werden, insbesondere mit einem Abschlag seiner Wertzahl und/oder Zwischenergebnissen wie einer Teildecodierung, einer Modulgröße oder dergleichen.

Während der Aufnahme der Vielzahl von Bildern verändert sich bevorzugt mindestens ein Aufnahmeparameter, insbesondere von Bild zu Bild. Somit sind die Bilder durch die veränderte Aufnahmesituation untereinander nicht gleich, insbesondere sind keine zwei Bilder gleich. Das führt dazu, dass eine gewisse Spannbreite der Wertzahlen der Codebildbereiche über die Bilder hinweg zu erwarten ist, eine entsprechende Priorisierung also besonders große Vorteile verspricht. Die Veränderung kann der Codeleser veranlassen, beispielsweise durch Variation einer Fokuseinstellung oder einer Belichtung, oder dies ergibt sich aus der Umgebung durch die Perspektive, das Umgebungslicht oder dergleichen.

Die Vielzahl von Bildern wird bevorzugt im Laufe einer Relativbewegung zwischen Codelesevorrichtung und dem mindestens einen Objekt aufgenommen, insbesondere ist die Codelesevorrichtung an einer Fördereinrichtung montiert, von der das mindestens eine Objekt durch ein Lesefeld der Codelesevorrichtung gefördert wird. Das ist eine häufige Anwendungssituation, in der eine Sequenz mehrerer Bilder entsteht, die in einem Zeitfenster oder Lesetor bearbeitet werden müssen, das von äußeren Umständen wie der Fördergeschwindigkeit und der Objektdichte auf dem Förderband abhängt. Die unterschiedlichen Förderpositionen jeweils aufgenommener Objekte beziehungsweise die daraus resultierende Variation der Perspektive ist ein Beispiel für eine Veränderung von Aufnahmeparametern gemäß dem vorigen Absatz.

Die Steuer- und Auswertungseinheit ist bevorzugt dafür ausgebildet, die Auswertung der Vielzahl von Bildern spätestens nach einer zweiten Maximalzeit abzubrechen. Damit ist ein globaler Abbruch gemeint, im Gegensatz zu dem zuvor beschriebenen Abbruch lediglich für einen bestimmten Codebildbereich nach Ablauf der ersten Maximalzeit. Es werden also weder Bilder weiter segmentiert noch Codebildbereiche weiter mit einem Decoderverfahren bearbeitet. Die zweite Maximalzeit entspricht vorzugsweise einem Lesetor, die Ergebnisse müssen danach vorliegen, weil eine Entscheidung über das Objekt zu treffen ist beziehungsweise ein neues Objekt in das Lesefeld der Codelesevorrichtung eingeführt wird. Die zweite Maximalzeit ist nicht unbedingt von vorneherein bekannt, sondern beispielsweise daran gebunden, wann ein Objekt den Lesebereich verlässt beziehungsweise ein neues Objekt in den Lesebereich kommt. Es sind aber auch feste beziehungsweise parametrierte Laufzeiten oder Nachlaufzeiten denkbar. Bilder und Codebildbereiche, die sich nach Ablauf der zweiten Maximalzeit noch in einer der beiden Queues befinden, werden je nach Ausführungsform mit einem entsprechenden Nichtverarbeitetstempel ausgegeben, gelöscht oder ganz ans Ende ihrer Queues geschoben, bis sich später eine zeitliche Lücke für ihre Verarbeitung findet. Möglicherweise bietet die Anwendung diese zeitliche Toleranz. Es kann aber auch zu Diagnosezwecken hilfreich sein herauszufinden, ob die Wertzahl die verspätet ausgewerteten Codebildbereiche angemessen priorisiert hat.

Die Steuer- und Auswertungseinheit ist bevorzugt dafür ausgebildet, Leseergebnisse der Bearbeitung mit mindestens einem Decoderverfahren über mindestens zwei Codebildbereiche hinweg zu kombinieren. Dadurch können Teillesungen womöglich noch zu einer vollständigen Decodierung zusammengefügt werden.

Die Steuer- und Auswertungseinheit ist bevorzugt dafür ausgebildet, Codebildbereiche, die einen bereits gelesenen Code enthalten, aus der zweiten Queue zu entfernen und/oder nicht in der zweiten Queue zu speichern. Damit werden im Ergebnis einmal erfolgreich gelesene Codes aus den anderen Bildern ausmaskiert. Wird ein korrespondierender Codebildbereich in einem späteren Bild nochmals gefunden, so kann er direkt verworfen werden. In einer Förderanwendung lässt sich die Entsprechung von Codebildbereichen aus der erwarteten zwischenzeitlichen Bewegung gut abschätzen. Mit entfernen, nicht speichern oder verwerfen ist vorzugsweise nur die Behandlung innerhalb des Codelesens gemeint. Die Codebildbereiche können zu anderen Zwecken gespeichert werden oder bleiben und beispielsweise lediglich mit einem Maskierungsflag gekennzeichnet werden. Alternativ zu dieser Ausführungsform kann ein redundantes Lesen sogar gewünscht sein, wobei aber auch in diesem Fall vorzugsweise die Wertzahl von Codebildbereichen, die einem bereits gelesenen Code entsprechen, herabgesetzt wird, um noch gar nicht gelesenen Codes Vorrang zu geben.

Das erfindungsgemäße Verfahren ist ein computerimplementiertes Verfahren, das beispielsweise in einer Steuer- und Auswertungseinheit eines Codelesers und/oder einer daran angeschlossenen Recheneinheit abläuft. Es kann auf ähnliche Weise weitergebildet werden wie die erfindungsgemäße Codelesevorrichtung oder eine ihrer Ausführungsformen und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Codelesers über einem Förderband;
- Fig. 2: ein beispielhaftes Ablaufdiagramm für eine priorisierte Verarbeitung von Codebildbereichen über mehrere Bilder einer Bildsequenz hinweg;
- Fig. 3: ein erstes Beispiel eines Vergleichs des Zeitablaufs bei herkömmlicher Verarbeitung und priorisierter Verarbeitung von Codebildbereichen über mehrere Bilder einer Bildsequenz hinweg; und
- Fig. 4: ein zweites Beispiel ähnlich Figur 3, jedoch mit einer anderen Anzahl Codebildbereiche und anderen Verarbeitungszeiten je Codebildbereich.

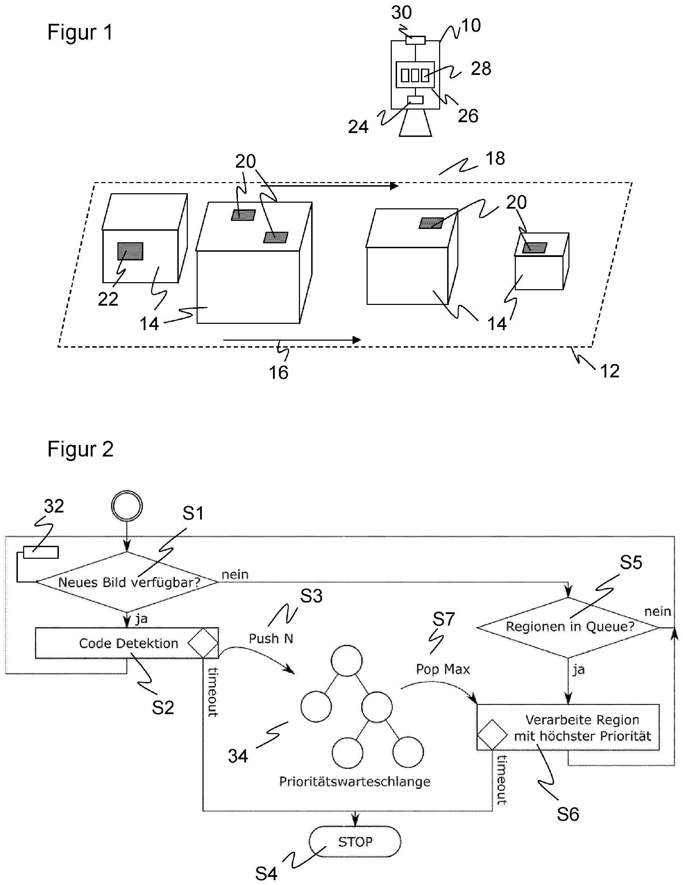

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codebildbereiche 20, die von dem Codeleser 10 erfasst und ausgewertet werden. Diese Codebildbereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Außerdem gibt es Förderbänder 12, die zu breit sind, um von einem Codeleser 10 erfasst zu werden, so dass dann mehrere Codeleser 10 oder, was hier nicht weiter unterschieden wird, mehrere Kameraköpfe eines Codelesers 10 nebeneinander angeordnet werden. Mehrere Codeleser 10 werden in der Praxis meist als Lesetunnel zusammengefasst. Diese stationäre Anwendung des Codelesers 10 an einem Förderband ist in der Praxis sehr häufig. Die Erfindung bezieht sich aber allgemeiner auf den Codeleser 10 selbst beziehungsweise das darin implementierte Verfahren zum Auffinden der Codebildbereiche 20 und zum Lesen der jeweiligen Codes einer Bildsequenz, so dass dieses Beispiel nicht einschränkend verstanden werden darf. Es gibt andere Möglichkeiten, mit einem Codeleser 10 eine Bildsequenz aufzunehmen, etwa durch Bewegen des Codelesers 10 oder durch unterschiedliche Beleuchtungsszenarien

Der Codeleser 10 erfasst mit einem Bildsensor 24 Bilddaten der geförderten Objekte 14 und der Codebildbereiche 20, die von einer Steuer- und Auswertungseinheit 26 mittels Bildauswertung und Decodierverfahren weiterverarbeitet werden. Ein Codeleser 10 mit einem Bildsensor 24 wird auch als kamerabasierter Codeleser bezeichnet. Vorzugsweise ist ein matrixförmiger Bildsensor 24 vorgesehen, der jeweils mit einer Aufnahme ein Bild seines Lesebereichs erzeugt. Die Steuer- und Auswertungseinheit 26 kann mehrere Bausteine aufweisen, wie ein FPGA (Field Programmable Gate Array), einen Mikroprozessor (CPU), ein ASIC (Application-Specific Integrated Circuit), ein DSP (Digital Signal Processor) oder dergleichen. Die Steuer- und Auswertungseinheit 26 umfasst vorzugsweise mehrere Verarbeitungseinheiten 28 für eine parallele Verarbeitung, die hier als Unterstrukturen dargestellt sind, also beispielsweise mehrere Bausteine, Prozessoren oder Prozessorkerne, alternativ aber für jede andere Hard- oder Softwareimplementierung einer Parallelverarbeitung stehen.

Über eine Schnittstelle 30 gibt der Codeleser 10 Informationen aus, wie gelesene Codes oder Bilddaten. Es ist auch denkbar, dass die Steuer- und Auswertungseinheit 26 nicht in dem eigentlichen Codeleser 10, also innerhalb dessen in Figur 1 als Kamerasymbol gezeigten Gehäuse angeordnet ist, sondern als eigenes Steuerungsgerät an einen oder mehrere Codeleser 10 angeschlossen wird. In einem Verbund mehrerer Codeleser 10 können auch ein Codeleser 10 als Master oder mehrere Codeleser 10 Aufgaben eines Steuerungsgeräts übernehmen. Dann dient die Schnittstelle 30 oder eine weitere Schnittstelle als Verbindung zwischen interner und externer Steuerung und Auswertung. Die Steuer- und Auswertungsfunktionalität kann somit praktisch beliebig auf interne und externe Bausteine verteilt werden, wobei die externen Bausteine auch über Netzwerk oder Cloud angeschlossen oder als Edge-Device ausgeführt sein können. Das alles wird hier nicht weiter unterschieden und die Steuer- und Auswertungseinheit 26 unabhängig von der konkreten Implementierung als Teil des Codelesers 10 aufgefasst.

Figur 2 zeigt ein beispielhaftes Ablaufdiagramm für eine priorisierte Verarbeitung von Codebildbereichen 20 über mehrere Bilder einer Bildsequenz hinweg. Es wird ein beispielhafter vollständiger Ablauf gezeigt, nicht alle Schritte müssen in jeder Ausführungsform umgesetzt sein. Die Verarbeitung gemäß Figur 2 findet vorzugsweise fortlaufend statt, es wird insbesondere nicht gewartet, bis eine Bildsequenz vollständig ist, also ein Objekt 14 den Erfassungsbereich 18 durchlaufen hat. Der Ablauf wird zu einem Zeitpunkt beginnend beschrieben, in dem eine neue Bildsequenz zu bearbeiten ist, beziehungsweise die Bearbeitung einer früheren Bildsequenz abgeschlossen ist. Nicht gezeigt sind die Schritte im Hintergrund, mit denen Bilder aufgenommen und in eine erste Queue 32 für Bilder der Bildsequenz geschoben werden. Dabei ist vorzugsweise ein Trigger vorgesehen, beispielsweise eine Lichtschranke oder eine in den Codeleser 10 integrierte Objekterkennung, so dass eine Bildsequenz immer erst startet, wenn ein neues Objekt 14 in den Erfassungsbereich 18 eintritt.

In einem Schritt S1 wird geprüft, ob in der ersten Queue 32 für Bilder der Bildsequenz mindestens ein Bild vorhanden ist. Die erste Queue ist vorzugsweise eine einfache FiFo, die also die Chronologie der Bildaufnahme in der Bildsequenz erhält.

Ist ein Bild verfügbar, so wird es in einem Schritt S2 segmentiert. Wie einleitend beschrieben und an sich bekannt, werden bei der Segmentierung anhand von vergleichsweise einfachen Merkmalen wie Kontrast, Kantenzahl, Farbe, Geometrie, Größe einer Bildstruktur und dergleichen Codebildbereiche 20 in dem Bild gefunden. Dabei ist zu diesem Zeitpunkt noch nicht klar, ob tatsächlich ein lesbarer Code in einem jeweiligen Codebildbereich 20 aufgenommen ist.

Die Segmentierung und/oder eine nachgelagerte Bewertung weist den Codebildbereichen 20 eine Wertzahl zu (Scoring). In einem Schritt S3 werden die in der Segmentierung des Schrittes S2 gefundenen Codebildbereiche 20 entsprechend ihrer Wertzahl in einer zweite Queue 34 eingereiht (Push N). Das gilt ebenso für spätere Iterationen nach der Segmentierung weiterer Bilder der Bildsequenz. Die zweite Queue 34 ist demnach eine Prioritätswarteschlange über alle bisher gefundenen Codebildbereiche 20 auch über mehrere Bilder der Bildsequenz hinweg.

Sofern eine Maximalzeit, insbesondere ein Lesetor, während der Segmentierung endet, wird die Verarbeitung in einem Schritt S4 abgebrochen (timeout), damit das Verfahren verlässlich terminiert. Die Bildsequenz konnte dann nicht vollständig verarbeitet werden, es steht aber keine Verarbeitungszeit mehr zur Verfügung, insbesondere weil nachgelagerte Operationen beginnen oder ein neues Lesetor startet. Andernfalls, wenn die Segmentierung abgeschlossen wird und alle gefundenen Codebildbereiche 20 in die zweite Queue 34 einsortiert werden, kehrt der Ablauf zum Schritt S1 zurück.

Wenn im Schritt S1 kein neues Bild verfügbar ist, wird in einem Schritt S5 geprüft, ob in der zweiten Queue 34 noch Codebildbereiche 20 vorhanden sind, die in Figur 2 Regionen genannt werden. Ist das nicht der Fall, kehrt das Verfahren zum Schritt S1 zurück, momentan ist nichts zu tun. Es wird aber vorzugsweise noch ohne Darstellung geprüft, ob die Maximalzeit abgelaufen ist, in dem Fall wird mit dem Schritt S4 abgebrochen.

Wenn im Schritt S5 die zweite Queue 34 noch mindestens einen Codebildbereich 20 enthält, wird in einem Schritt S6 ein Codebildbereich 20 verarbeitet, der dazu in einem Schritt S7 aus der zweiten Queue 34 entnommen wird (Pop Max). Dabei handelt es sich gemäß der Sortierung oder Priorisierung der zweiten Queue 34 um denjenigen unter den noch unverarbeiteten Codebildbereichen 20 mit der höchsten Wertzahl, der also am ehesten ein erfolgreiches Codelesen verspricht. Es wird mit mindestens einem Decoderverfahren versucht, den Code zu lesen. Wiederum wird im Schritt S4 abgebrochen, wenn währenddessen die Maximalzeit abläuft. Sofern der Code gelesen werden kann, wird der Codeinhalt an geeigneter Stelle abgespeichert oder ausgegeben, und der Ablauf kehrt zum Schritt S1 zurück. Optional wird eine weitere Maximalzeit geprüft, die sich nicht global auf ein Lesetor oder dergleichen bezieht, sondern einem einzelnen Codebildbereich 20 eine höchste Bearbeitungsdauer zuweist. Mit Ablauf der weiteren Maximalzeit endet der Ablauf nicht, sondern kehrt zum Schritt S1 zurück. Der vorerst vergeblich bearbeitete Codebildbereich 20 wird verworfen oder mit herabgesetzter Wertzahl in die zweite Queue zurückgegeben, vorzugsweise unter Sicherung von Zwischenergebnissen, falls diesem Codebildbereich 20 in einer späteren Iteration noch mehr Verarbeitungszeit gewidmet werden kann. Dieses Vorgehen ist auch deshalb vorteilhaft, weil zu Beginn einer Bildsequenz nur Codebildbereiche 20 des ersten Bildes oder der ersten Bilder verfügbar sind. Es ist dann schon sinnvoll, diese Codebildbereiche 20 auszuwerten, da ansonsten Verarbeitungszeit ungenutzt bliebe Die Verarbeitung sollte sich nicht an einem schlechten frühen Codebildbereich 20 "festfressen", sondern die Möglichkeit haben, auf aussichtsreichere, später aufgenommene Codebildbereiche 20 zu wechseln.

Der dargestellte Ablauf endet in jedem Fall durch Ablauf der Maximalzeit. Das entspricht der Anwendungssituation der Figur 1, in der das durchlaufende Objekt 14 die Maximalzeit über die Förderzeit durch den Erfassungsbereich 18 bestimmt. Beim Abbruch sind aber viele und vorzugsweise alle Codebildbereiche 20 der Bildsequenz verarbeitet worden. Alternativ könnte auch die Anzahl der Bilder der Bildsequenz begrenzt sein, und der Ablauf endet, wenn alle Bilder und darin gefundenen Codebildbereiche 20 abgearbeitet sind.

Die bisherige Beschreibung des Ablaufs gemäß Figur 2 hat eine mögliche vorteilhafte Parallelisierung in den mehreren Verarbeitungseinheiten 28 noch nicht berücksichtigt. Die Priorisierung von Codebildbereichen 20 über Bilder einer Bildsequenz hinweg ist schon ohne Parallelisierung von Vorteil, da jeweils der erfolgversprechendste Codebildbereich 20 bearbeitet wird, ungeachtet seiner Herkunft aus einem bestimmten Bild der Bildsequenz.

Im Falle einer vorteilhaften parallelisierten Ausführungsform kann der Ablauf auf die einzelnen Verarbeitungseinheiten 28 oder Threads bezogen werden. Die Queues 32, 34 sollten dann vorzugsweise threadsicher ausgeführt sein. Es werden dann also parallel mehrere Codebildbereiche 20 im Schritt S6 mit einem Decoderverfahren bearbeitet, und immer wenn ein neues Bild in der ersten Queue 32 gefunden wird, kümmert sich die nächste freiwerdende Verarbeitungseinheit 28 im Schritt S2 parallel zu der fortgesetzten Decodierung der bisherigen Codebildberieche 20 um die Segmentierung des neuen Bildes und damit das Hinzufügen weiterer Codebildbereiche 20 zu der zweiten Queue 34.

Der gezeigte Ablauf bevorzugt stets die Segmentierung eines neuen Bildes gegenüber der Decodierung schon gefundener Codebildbereiche 20. Das ist sinnvoll und bevorzugt, weil zusätzliche Codebildbereiche 20 die Chance einer neuen höchsten Wertzahl und damit einem schnellen erfolgreichen Lesen eines Codes bieten. Alternativ kann aber auch eine Gewichtung vorgegeben werden, wieviel Aufmerksamkeit beziehungsweise Verarbeitungszeit neue Bilder gegenüber bereits gefundenen Codebildbereichen 20 haben sollen. Das lässt sich insbesondere in der Logik der Figur 2 abbilden, wenn im Schritt S1 gemäß der Gewichtung zumindest gelegentlich zum Schritt S5 übergegangen wird, obwohl die erste Queue 32 nicht leer ist. Weiterhin ist denkbar, dass mehrere Verarbeitungseinheiten 28 ein Bild gemeinsam in einer Parallelverarbeitung segmentieren. Wiederum insbesondere in der Logik der Figur 2 ausgedrückt, prüft dazu eine Verarbeitungseinheit 28 im Schritt S1 bei leerer erster Queue 32 noch zusätzlich, ob derzeit eine andere Verarbeitungseinheit 28 mit einer Segmentierung beschäftigt ist und unterstützt in diesem Fall durch gemeinsame parallele Segmentierung.

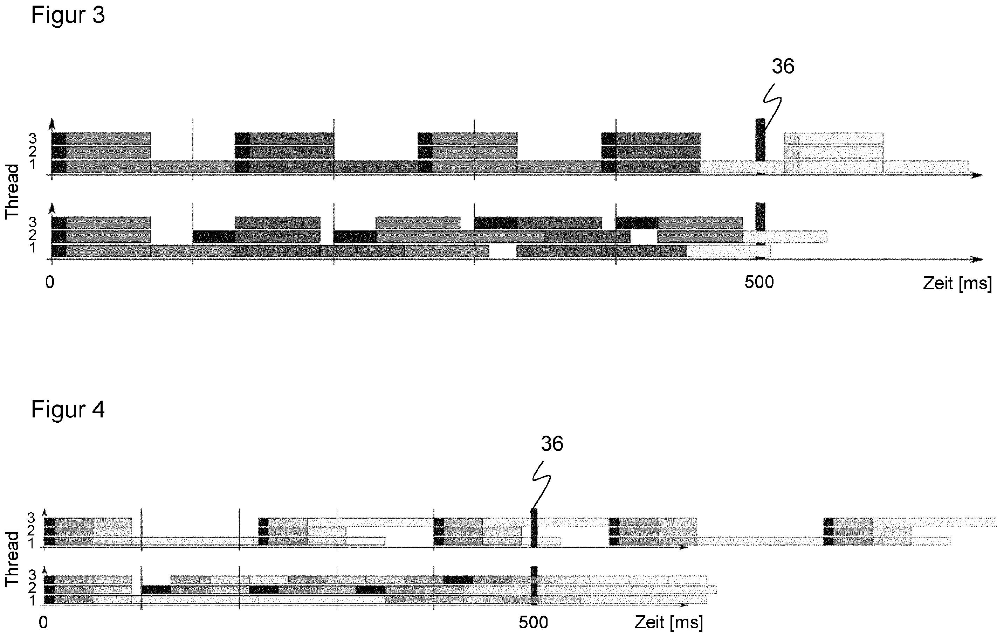

Figur 3 zeigt ein erstes Beispiel eines Vergleichs des Zeitablaufs bei herkömmlicher Verarbeitung chronologisch Bild für Bild (Figur 3 oben) und priorisierter Verarbeitung von Codebildbereichen 20 gemäß einer Ausführungsform der Erfindung über mehrere Bilder einer Bildsequenz hinweg (Figur 3 unten). Dabei stehen jeweils drei Verarbeitungseinheiten 28 oder Threads für eine Parallelverarbeitung zur Verfügung. Vereinfachend wird angenommen, dass sich in dem herkömmlichen Verfahren jeweils alle drei Threads parallelisiert um die Segmentierung eines neuen Bildes der Bildsequenz kümmern. Gemäß der Voraussetzung einer herkömmlichen Verarbeitung Bild für Bild kann die parallele Segmentierung erst beginnen, wenn das vorige Bild fertig bearbeitet ist. In der erfindungsgemäßen Ausführungsform wird das erste Bild ebenfalls parallel in allen drei Threads segmentiert, später kümmert sich jeweils der erste freiwerdende Thread um die Segmentierung eines weiteren Bildes. Hier könnte sogar noch weiter optimiert werden, wie schon oben kurz erläutert, indem weitere freiwerdende Threads sich parallelisiert an der Segmentierung beteiligen.

In dem ersten Beispiel wird eine Bildsequenz von fünf Bildern mit einer Bildwiederholfrequenz von 10Hz verarbeitet. Das Lesetor endet 100ms nach Aufnahme des fünften Bildes bei der Markierung 36 (Timeout) nach insgesamt 500ms. Jedes Bild enthält vier Codebildbereiche 20, deren Verarbeitung jeweils 60ms erfordert. Der Segmentierungsaufwand pro Bild beträgt 30ms. Ein etwaiger Zeitverlust durch Overhead der Parallelisierung wird vernachlässigt.

Bei der herkömmlichen Verarbeitung werden demnach fünfzehn der zwanzig Codebildbereiche 20 vollständig verarbeitet, und das letzte Bild muss verworfen werden. Die effektive Nutzung der verfügbaren Rechenleistung beträgt 68 %. Bei der erfindungsgemäßen Ausführungsform werden achtzehn der zwanzig Codebildbereiche 20 vollständig verarbeitet, mit einer effektiven Nutzung der verfügbaren Rechenleistung von 82 %.

Figur 4 zeigt ein zweites Beispiel. Der Umfang der Bildsequenz und die Dauer des Lesetors sind unverändert. Im Unterschied zu dem ersten Beispiel der Figur 3 enthält nun jedes Bild sieben Codebildbereiche 20, wobei sechs der Codebildbereiche 20 eine Verarbeitungszeit von 40ms, ein Codebildbereich 20 jedoch von 130ms benötigt, beispielsweise aufgrund von Streudruck. Der Segmentierungsaufwand pro Bild beträgt wie zuvor 30ms.

Im zweiten Beispiel werden bei herkömmlicher Verarbeitung neunzehn der fünfunddreißig Codebildbereiche 20 verarbeitet und zwei der fünf Bilder verworfen. Die effektive Nutzung der verfügbaren Rechenleistung beträgt etwa 69 %. Bei der erfindungsgemäßen Ausführungsform werden fünfundzwanzig der fünfunddreißig Codebildbereiche 20 vollständig verarbeitet bei einer effektiven Nutzung der verfügbaren Rechenleistung von 97 %. Zu beachten ist bei beiden Beispielen zusätzlich, dass dank der Priorisierung über die Bildsequenz hinweg die nicht bearbeiteten Codebildbereiche 20 mit recht hoher Wahrscheinlichkeit auch gar keinen Code enthalten und umgekehrt die herkömmliche Verarbeitung die letzten Bilder der Bildsequenz und deren womöglich besonders aussichtsreiche Codebildbereiche 20 nie beachten konnte. Zu beiden Beispielen ist zudem noch illustriert, wann eine vollständige Verarbeitung enden würde, wenn das Lesetor großzügiger gewählt werden kann, auch hier zeigt die Erfindung deutliche Vorteile.

Das erfindungsgemäße Vorgehen ist besonders vorteilhaft, wenn die Rechenzeit knapp wird, dann kann sich die Latenz gegenüber der herkömmlichen Verarbeitung nur verbessern. Enthält beispielsweise als Extremfall das erste Bild einen Codebildbereich 20, der innerhalb des Lesetors nicht bearbeitet werden kann, dann scheitert die herkömmliche Verarbeitung vollständig, weil es nie zur Bearbeitung der weiteren Bilder kommt. Bei dem erfindungsgemäßen Vorgehen kann äußerstenfalls ein einzelner Thread mit der vergeblichen Bearbeitung dieses Codebildbereichs 20 ausfallen. Die anderen Threads können sich parallel mit anderen, vielleicht vielversprechenderen Bildern der Bildsequenz befassen.

In vorteilhafter Weiterbildung der Erfindung können Ergebnisse noch auf andere über die Bildsequenz hinweg verarbeitet werden. So ist möglich, Teilergebnisse aus über denselben Code zusammengehörigen Codebildbereichen 20 mehrerer Bilder zusammenzusetzen, um einen je Bild nur partiell erkennbaren Code insgesamt doch noch zu lesen. Als weitere Option ist zur Beschleunigung denkbar, nach einem Leseerfolg die diesem gelesenen Code entsprechenden Codebildbereiche 20 anderer Bilder nicht erneut zu verarbeiten, zu verwerfen oder jedenfalls deren Wertzahl herabzusetzen (GoodRead Masking).

## Patentansprüche

1. Codelesevorrichtung (20) zum Lesen von optischen Codes, die einen Bildsensor (24) zur Aufnahme von Bildern mindestens eines Objekts (14) mit mindestens einem optischen Code sowie eine Steuer- und Auswertungseinheit (26) aufweist, die dafür ausgebildet ist, nacheinander eine Bildsequenz mit einer Vielzahl von Bildern aufzunehmen, in den Bildern Codebildbereiche (20) aufzufinden, in denen sich jeweils ein Kandidat für einen optischen Code befindet, die Codebildbereiche (20) mit einer Wertzahl daraufhin zu bewerten, wie wahrscheinlich es ist, dass sich darin ein optischer Code befindet, die Codebildbereiche (20) über Bilder der Bildsequenz hinweg in einem gemeinsamen Pool zu sammeln und mit mindestens einem Decoderverfahren zu bearbeiten, um den optischen Code des Codebildbereichs (20) zu lesen und dafür eine Verarbeitungsreihenfolge der Codebildbereiche (20) mit dem mindestens einen Decoderverfahren über mehrere Bilder der Vielzahl von Bildern hinweg zu wählen, wobei die gemäß Wertzahl relevantesten Codebildbereiche höchste Priorität genießen.

2. Codelesevorrichtung (10) nach Anspruch 1,
wobei die Steuer- und Auswertungseinheit (26) mindestens zwei Verarbeitungseinheiten (28) für eine parallele Verarbeitung von Bildern und/oder Codebildbereichen (20) aufweist.

3. Codelesevorrichtung (10) nach Anspruch 1 oder 2,
wobei die Wertzahl aus einem Kontrast, einer Kantenanzahl, einer Kantendichte, einer Hauptorientierung einer Textur und/oder Eigenschaften eines Codeuntergrundes bestimmt wird.

4. Codelesevorrichtung (10) nach einem der vorhergehenden Ansprüche,
wobei die Steuer- und Auswertungseinheit (26) dafür ausgebildet ist, Bilder der aufgenommenen Vielzahl von Bildern in einer ersten Queue (32) zu speichern.

5. Codelesevorrichtung (10) nach einem der vorhergehenden Ansprüche,
wobei die Steuer- und Auswertungseinheit (26) dafür ausgebildet ist, Codebildbereiche (20) in einer zweiten Queue (34) zu speichern, insbesondere, wenn abhängig von Anspruch 3, in einer nach Wertzahl priorisierten Reihenfolge.

6. Codelesevorrichtung (10) nach Anspruch 4,
wobei die Steuer- und Auswertungseinheit (26) dafür ausgebildet ist, ein Bild aus der ersten Queue (32) zu entnehmen, darin Codebildbereiche (20) aufzufinden und die gefundenen Codebildbereiche (20) in der zweiten Queue (34) zu speichern.

7. Codelesevorrichtung (10) nach Anspruch 5,
wobei die Steuer- und Auswertungseinheit (26) dafür ausgebildet ist, einen Codebildbereich (20) aus der zweiten Queue (34) zu entnehmen und mit mindestens einem Decoderverfahren zu bearbeiten.

8. Codelesevorrichtung (10) nach Anspruch 6 und 7,
wobei die Steuer- und Auswertungseinheit (26) dafür ausgebildet ist, auf die erste Queue (32) und die zweite Queue (34) nach einem Vorzugsschema zuzugreifen, insbesondere nur dann einen Codebildbereich (20) aus der zweiten Queue (34) zu entnehmen, wenn die erste Queue (32) leer ist.

9. Codelesevorrichtung (10) nach einem der vorhergehenden Ansprüche,
wobei die Steuer- und Auswertungseinheit (26) dafür ausgebildet ist, die Bearbeitung eines Codebildbereichs (20) mit mindestens einem Decoderverfahren spätestens nach einer ersten Maximalzeit abzubrechen.

10. Codelesevorrichtung (10) nach einem der vorhergehenden Ansprüche,
wobei sich während der Aufnahme der Vielzahl von Bildern mindestens ein Aufnahmeparameter verändert, insbesondere von Bild zu Bild.

11. Codelesevorrichtung (10) nach einem der vorhergehenden Ansprüche, wobei die Vielzahl von Bildern im Laufe einer Relativbewegung zwischen Codelesevorrichtung (10) und dem mindestens einen Objekt (14) aufgenommen wird, insbesondere die Codelesevorrichtung (10) an einer Fördereinrichtung (12) montiert ist, von der das mindestens eine Objekt (14) durch ein Lesefeld (18) der Codelesevorrichtung (10) gefördert wird.

12. Codelesevorrichtung (10) nach einem der vorhergehenden Ansprüche, wobei die Steuer- und Auswertungseinheit (26) dafür ausgebildet ist, die Auswertung der Vielzahl von Bildern spätestens nach einer zweiten Maximalzeit abzubrechen.

13. Codelesevorrichtung (10) nach einem der vorhergehenden Ansprüche, wobei die Steuer- und Auswertungseinheit (26) dafür ausgebildet ist, Leseergebnisse der Bearbeitung mit mindestens einem Decoderverfahren über mindestens zwei Codebildbereiche (20) hinweg zu kombinieren.

14. Codelesevorrichtung (10) nach einem der vorhergehenden Ansprüche, wobei die Steuer- und Auswertungseinheit (26) dafür ausgebildet ist, Codebildbereiche (20), die einen bereits gelesenen Code enthalten, aus der zweiten Queue (34) zu entfernen und/oder nicht in der zweiten Queue (34) zu speichern.

15. Verfahren zum Lesen von optischen Codes, bei dem nacheinander eine Vielzahl von Bildern mindestens eines Objekts (14) mit mindestens einem optischen Code aufgenommen werden, in den Bildern Codebildbereiche (20) aufgefunden werden, in denen sich jeweils ein Kandidat für einen optischen Code befindet, Codebildbereiche (20) mit einer Wertzahl daraufhin bewertet werden, wie wahrscheinlich es ist, dass sich darin ein optischer Code befindet, die Codebildbereiche (20) über Bilder der Bildsequenz hinweg in einem gemeinsamen Pool gesammelt werden und mit mindestens einem Decoderverfahren bearbeitet werden, um den optischen Code des Codebildbereichs (20) zu lesen und dafür eine Verarbeitungsreihenfolge der Codebildbereiche (20) mit dem mindestens einen Decoderverfahren über mehrere Bilder der Vielzahl von Bildern hinweg gewählt wird, wobei die gemäß Wertzahl relevantesten Codebildbereiche höchste Priorität genießen.

## Claims

1. A code reading device (20) for reading optical codes, which has an image sensor (24) for recording images of at least one object (14) having at least one optical code and a control and evaluation unit (26) which is configured to successively record an image sequence comprising a plurality of images, to locate code image zones (20) in the images, with a candidate for an optical code being present in each of said code image zones (20), to assess the code image zones (20) with a value number as to how probable it is that an optical code is present therein, to collect the code image zones (20) across images of the image sequence in a common pool and to process them using at least one decoder method in order to read the optical code of the code image zone (20) and, for this purpose, to select a processing order of the code image zones (20) by the at least one decoder method across several images of the plurality of images, wherein the code image zones that are the most relevant according to the value number have the highest priority.

2. A code reading device (10) according to claim 1,
wherein the control and evaluation unit (26) has at least two processing units (28) for a parallel processing of images and/or code image zones (20).

3. A code reading device (10) according to claim 1 or 2,
wherein the value number is determined from a contrast, a number of edges, an edge density, a main orientation of a texture and/or properties of a code base surface.

4. A code reading device (10) according to any one of the preceding claims, wherein the control and evaluation unit (26) is configured to store images of the recorded plurality of images in a first queue (32).

5. A code reading device (10) according to any one of the preceding claims, wherein the control and evaluation unit (26) is configured to store code image zones (20) in a second queue (34), in particular, if dependent on claim 3, in an order prioritized by value number.

6. A code reading device (10) according to claim 4,
wherein the control and evaluation unit (26) is configured to take an image from the first queue (32), to locate code image zones (20) therein and to store the located code image zones (20) in the second queue (34).

7. A code reading device (10) according to claim 5,
wherein the control and evaluation unit (26) is configured to take a code image zone (20) from the second queue (34) and to process it using at least one decoder method.

8. A code reading device (10) according to claim 6 and 7,
wherein the control and evaluation unit (26) is configured to access the first queue (32) and the second queue (34) according to a preferred scheme, in particular to remove a code image zone (20) from the second queue (34) only if the first queue (32) is empty.

9. A code reading device (10) according to any one of the preceding claims, wherein the control and evaluation unit (26) is configured to abort the processing of a code image zone (20) by at least one decoder method after a first maximum time at the latest.

10. A code reading device (10) according to any one of the preceding claims, wherein at least one recording parameter changes during the recording of the plurality of images, in particular from image to image.

11. A code reading device (10) according to any one of the preceding claims, wherein the plurality of images are recorded in the course of a relative movement between the code reading device (10) and the at least one object (14), in particular the code reading device (10) is mounted at a conveying device (12) by which the at least one object (14) is conveyed through a reading field (18) of the code reading device (10).

12. A code reading device (10) according to any one of the preceding claims, wherein the control and evaluation unit (26) is configured to abort the evaluation of the plurality of images after a second maximum time at the latest.

13. A code reading device (10) according to any one of the preceding claims, wherein the control and evaluation unit (26) is configured to combine reading results of the processing by at least one decoder method across at least two code image zones (20).

14. A code reading device (10) according to any one of the preceding claims, wherein the control and evaluation unit (26) is configured to remove code image zones (20) which contain a code that has already been read from the second queue (34) and/or not to store them in the second queue (34).

15. A method for reading optical codes, in which a plurality of images of at least one object (14) having at least one optical code are successively recorded, code image zones (20) are located in the images, with a candidate for an optical code being present in each of said code image zones (20), code image zones (20) are assessed with a value number as to how likely it is that an optical code is located therein, the code image zones (20) are collected across images of the image sequence in a common pool and are processed using at least one decoder method in order to read the optical code of the code image zone (20) and, for this purpose, a processing order of the code image zones (20) by the at least one decoder method is selected across several images of the plurality of images, wherein the code image zones that are the most relevant according to the value number have the highest priority.

## Revendications

1. Dispositif de lecture de codes (20) pour lire des codes optiques, comprenant un capteur d'images (24) destiné à enregistrer des images d'au moins un objet (14) muni d'au moins un code optique, ainsi qu'une unité de commande et d'évaluation (26) conçue pour enregistrer successivement une séquence d'images comprenant une multitude d'images, pour retrouver dans les images des zones d'image à code (20) dans chacune desquelles se situe un candidat pour un code optique, pour évaluer les zones d'image à code (20) à l'aide d'une valeur numérique indiquant la probabilité qu'un code optique se situe dans lesdites zones, pour collecter dans un pool commun les zones d'image à code (20) à travers les images de la séquence d'images, et pour les traiter par au moins un procédé de décodage, afin de lire le code optique de la zone d'image à code (20) et de sélectionner à cet effet un ordre de traitement des zones d'image à code (20) par ledit au moins un procédé de décodage à travers plusieurs images parmi la multitude d'images, les zones d'image à code les plus pertinentes selon la valeur numérique bénéficiant de la plus haute priorité.

2. Dispositif de lecture de codes (10) selon la revendication 1,
dans lequel l'unité de commande et d'évaluation (26) comprend au moins deux unités de traitement (28) pour un traitement en parallèle d'images et/ou de zones d'image à code (20).

3. Dispositif de lecture de codes (10) selon la revendication 1 ou 2,
dans lequel la valeur numérique est déterminée à partir d'un contraste, d'un nombre de bords, d'une densité de bords, d'une orientation principale d'une texture et/ou des propriétés d'un support de code.

4. Dispositif de lecture de codes (10) selon l'une des revendications précédentes,
dans lequel l'unité de commande et d'évaluation (26) est conçue pour stocker des images de la multitude d'images enregistrées dans une première file d'attente (32).

5. Dispositif de lecture de codes (10) selon l'une des revendications précédentes,
dans lequel l'unité de commande et d'évaluation (26) est conçue pour stocker des zones d'image à code (20) dans une deuxième file d'attente (34), en particulier, si dépendant de la revendication 3, selon un ordre priorisé en fonction de la valeur numérique.

6. Dispositif de lecture de codes (10) selon la revendication 4,
dans lequel l'unité de commande et d'évaluation (26) est conçue pour prélever une image dans la première file d'attente (32), pour y retrouver des zones d'image à code (20) et pour stocker les zones d'image à code (20) retrouvées dans la deuxième file d'attente (34).

7. Dispositif de lecture de codes (10) selon la revendication 5,
dans lequel l'unité de commande et d'évaluation (26) est conçue pour prélever une zone d'image à code (20) dans la deuxième file d'attente (34) et pour la traiter par au moins un procédé de décodage.

8. Dispositif de lecture de codes (10) selon les revendications 6 et 7,
dans lequel l'unité de commande et d'évaluation (26) est conçue pour accéder à la première file d'attente (32) et à la deuxième file d'attente (34) selon un schéma préférentiel, en particulier pour ne prélever une zone d'image à code (20) dans la deuxième file d'attente (34) que si la première file d'attente (32) est vide.

9. Dispositif de lecture de codes (10) selon l'une des revendications précédentes,
dans lequel l'unité de commande et d'évaluation (26) est conçue pour interrompre le traitement d'une zone d'image à code (20) par au moins un procédé de décodage au plus tard après un premier délai maximal.

10. Dispositif de lecture de codes (10) selon l'une des revendications précédentes,
dans lequel, pendant l'enregistrement de la multitude d'images, au moins un paramètre d'enregistrement change, en particulier d'une image à l'autre.

11. Dispositif de lecture de codes (10) selon l'une des revendications précédentes,
dans lequel la multitude d'images est enregistrée au cours d'un mouvement relatif entre le dispositif de lecture de codes (10) et ledit au moins un objet (14),
en particulier, le dispositif de lecture de codes (10) est monté sur un dispositif de transport (12) par lequel ledit au moins un objet (14) est transporté à travers un champ de lecture (18) du dispositif de lecture de codes (10).

12. Dispositif de lecture de codes (10) selon l'une des revendications précédentes,
dans lequel l'unité de commande et d'évaluation (26) est conçue pour interrompre l'évaluation de la multitude d'images au plus tard après un deuxième délai maximal.

13. Dispositif de lecture de codes (10) selon l'une des revendications précédentes,
dans lequel l'unité de commande et d'évaluation (26) est conçue pour combiner les résultats de lecture du traitement par au moins un procédé de décodage à travers au moins deux zones d'image à code (20).

14. Dispositif de lecture de codes (10) selon l'une des revendications précédentes,
dans lequel l'unité de commande et d'évaluation (26) est conçue pour supprimer de la deuxième file d'attente (34) les zones d'image à code (20) qui contiennent un code déjà lu et/ou pour ne pas les stocker dans la deuxième file d'attente (34).

15. Procédé de lecture de codes optiques, consistant à enregistrer successivement une multitude d'images d'au moins un objet (14) muni d'au moins un code optique, à retrouver dans les images des zones d'image à code (20) dans chacune desquelles se situe un candidat pour un code optique, à évaluer les zones d'image à code (20) à l'aide d'une valeur numérique indiquant la probabilité qu'un code optique se situe dans lesdites zones, à collecter dans un pool commun les zones d'image à code (20) à travers les images de la séquence d'images, et à les traiter par au moins un procédé de décodage, afin de lire le code optique de la zone d'image à code (20) et de sélectionner à cet effet un ordre de traitement des zones d'image à code (20) par ledit au moins un procédé de décodage à travers plusieurs images parmi la multitude d'images, les zones d'image à code les plus pertinentes selon la valeur numérique bénéficiant de la plus haute priorité.
